# EUROPEAN PATENT APPLICATION

(11) **EP 1 143 365 A2**
(43) Date of publication of application: **10.10.2001**
(21) Application number: 01108535.4
(22) Date of filing: 04.04.2001
(51) Int. Cl.: G06F 17/60

(54) **Method and system for insolvency claims resolution**

(30) Priority: 05.04.2000 US 194357 P; 16.06.2000 US 595527
(71) Applicant: Bader, John M., New York, NY 10128 (US); Reznick, Allan E., Chappaqua, NY 10514 (US)
(72) Inventor: Bader, John M., New York, NY 10128 (US); Reznick, Allan E., Chappaqua, NY 10514 (US)
(74) Representative: Vossius, Corinna

(57) **Abstract**

A method and system of utilizing an insuring or other financially responsible party to pay claims to creditors in an insolvency proceeding aligns the financial incentives of creditors with the financial incentives of those funding and resolving claims. The present invention shifts the risk of administration of the claims resolution process in an insolvency proceeding away from the insolvent entity and transfers the risk to the insuring or other financially responsible party which is an economically stronger entity with lower costs of capital and superior risk management resources.

## Description

### FIELD OF THE INVENTION

The present invention relates to a method and system for resolving claims by creditors against insolvent debtors during an insolvency proceeding.

### BACKGROUND INFORMATION

A business organization such as a corporation, a partnership, a single proprietorship, etc. may find itself unable to meet its financial obligations to its creditors. Insolvency procedures, pursuant to applicable laws, permit a debtor organization to satisfy its debts through the creation of a court supervised plan for the distribution of all or part of a debtor's cash, assets, or securities among its creditors (hereinafter referred to as a "distribution plan"). The distribution plan is typically the result of negotiations between creditors and the debtor. The distribution plan describes which of the debtor's property will be reserved to provide value to the creditors (the "subject property"), and further describes the manner in which this property will be distributed to the creditors.

In the United States, for example, the creation of a distribution plan is supervised by a court of competent jurisdiction which insures that the distribution plan complies with the Federal Bankruptcy Code or other applicable law such as laws governing the insolvencies of banks, insurance companies, stock brokerages, credit unions and other organizations not covered by the bankruptcy law. One of the requirements of insolvency law is that similarly situated creditors must receive similar treatment under the distribution plan. As a result, the distribution plan will describe a process that distributes to each similarly situated creditor a pro rata share of the debtor's subject property.

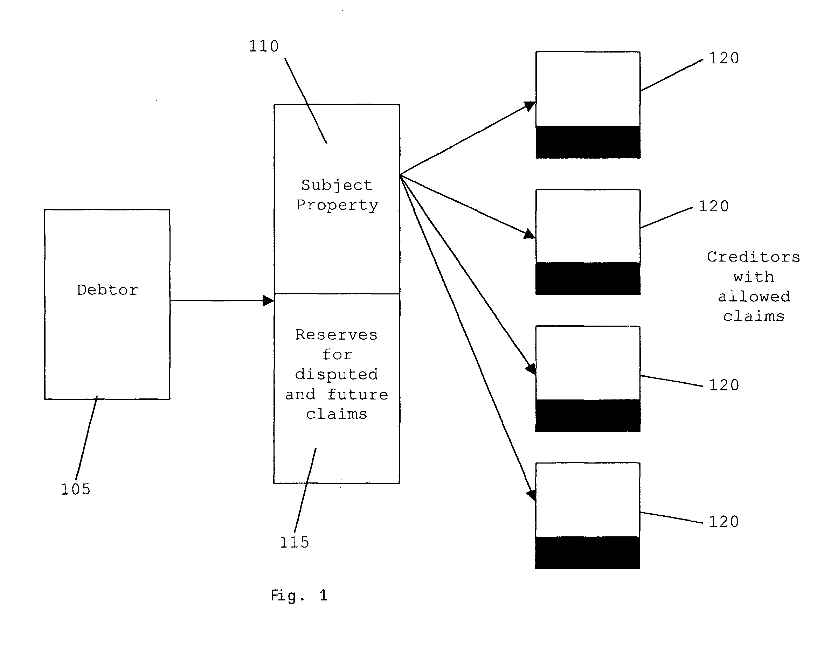

Once the court has confirmed the distribution plan, the debtor carries out the distribution plan by distributing to creditors the property called for by the distribution plan. Figures 1, 2 and 3 are flowcharts which illustrate the current process of claim distribution.

Referring to Figure 1, a debtor 105 files for insolvency protection pursuant to applicable rules or regulations. The subject property 110 of the debtor is reserved for distribution to creditors pursuant to a distribution plan. Debtor 105 distributes the subject property 110 according to the distribution plan to those creditors 120 whose claims have been allowed by the court ("allowed claims"). Each creditor 120 receives a pro rata share of its total allowed claims. The pro rata calculation is made by dividing the amount of the subject property 110 by the total amount of all allowed claims 120.

Sometimes, however, the total amount of all allowed claims 120 is not a fixed number by the time the distribution plan has taken effect. For example, there may be some claims that are still in dispute ("disputed claims"), or other claims that have yet to be made ("future claims"). As is depicted in Figures 1, 2 and 3, over time a number of disputed and future claims will be allowed by the court, which increases the total number of allowed claims 120 entitled to a pro rata distribution under the distribution plan as the claims resolution process progresses.

As the total amount of allowed claims is as yet uncertain at the commencement of the distribution and the debtor typically has little experience in the administration of claim distribution, the debtor risks over-distributing the subject property. Moreover, the debtor is an insolvent company and generally is not in a strong enough financial position to assume risk comfortably. As a result, the debtor typically will create significant reserves of subject property in anticipation of disputed and future claims, as depicted in Figure 1. The debtor will distribute allowed claims slowly until the debtor becomes more knowledgeable about the development of the disputed and future claims as illustrated by Figures 2 and 3.

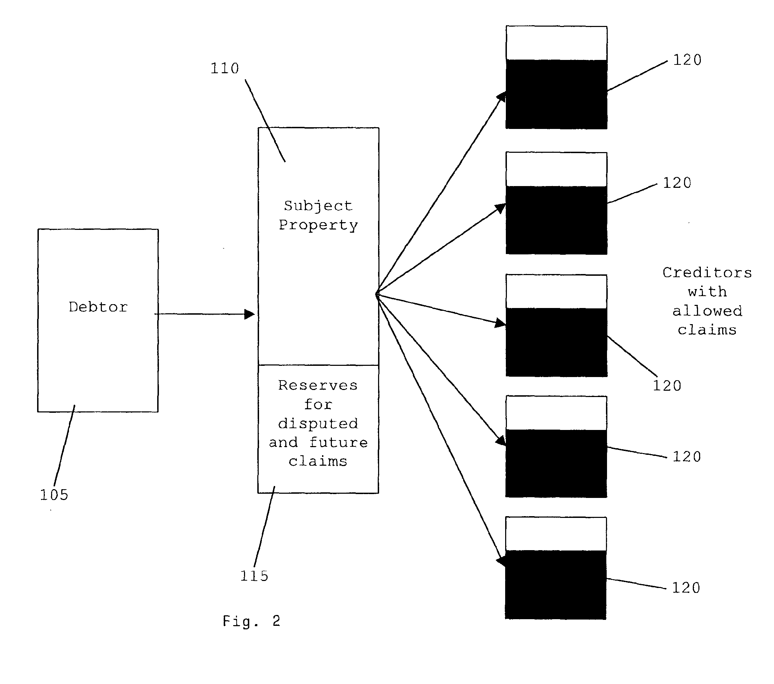

Figure 2 depicts an example of a second distribution according to the existing process of claim distribution. The debtor's reserves 115 for disputed and future claims grow smaller as the number of allowed claims 120 has increased. Creditors holding allowed claims 120, however, have still not received their final pro rata share of the distribution although it has been many months since the distribution plan went into effect.

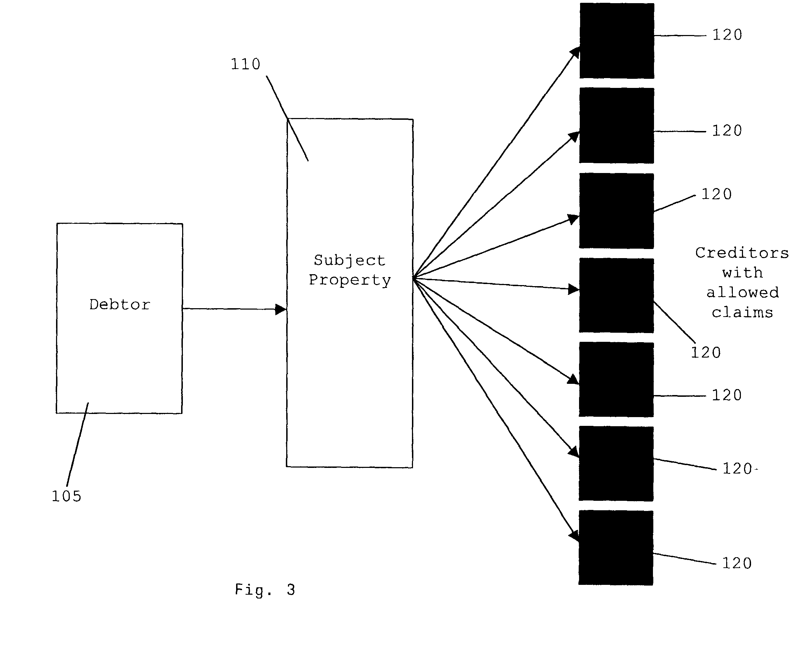

Figure 3 depicts an example of a final distribution pursuant to a conventional prior art distribution plan. Prior to the final distribution, any number of distributions may have occurred. The final distribution may not occur until months or years after the distribution plan has gone into effect. At the final distribution, the debtor's reserves 115 for disputed and future claims have been exhausted, and the total number of allowed claims has been determined. The allowed creditors 120, possibly after a long wait and much uncertainty, receive their final pro rata share according to the distribution plan. Significantly, it is not until the final distribution that the creditors 120 know the actual amount of their pro rata share of subject property 110 since it is not until the final distribution that the final number of allowed claims can be determined.

There are many problems with the current process for claim distribution in insolvency proceedings. Creditors, for example, incur risk in the form of uncertainty as to when they will receive their pro rata share of subject property, and uncertainty as to how much their final share will be. The creditors have incentive to know as quickly as possible, and also to quickly receive, the amount and value of their pro rata share.

In the current process of claim distribution, however, the debtor has incentives contrary to that of the creditors, i.e., to distribute the pro rata shares as slowly as possible. Furthermore, in cases of reorganization, the debtor will continue to do business after the insolvency period is over, often with the same creditors to whom it is obligated to make distributions. The debtor, therefore, has incentives to give certain creditors favorable settlements when resolving disputed claims. This raises the total number of allowed claims, and consequently lowers the pro rata share allowed each creditor upon final distribution.

Thus, there exists a need in the art for a method of aligning the financial incentives of creditors in an insolvency proceeding with the financial incentives of those who will be resolving the claims and funding the distributions to creditors.

### SUMMARY OF THE INVENTION

According to an embodiment of the present invention, an insurer or other financially responsible party is used to facilitate payment to creditors of a debtor in an insolvency proceeding, thereby aligning the financial incentives of creditors in an insolvency proceeding with the financial incentives of those funding and resolving claims. The method according to an embodiment of the present invention shifts the risk of administration of the claims resolution process in an insolvency proceeding away from the insolvent entity and transfers the risk to the insurer or other financially responsible party, an economically stronger entity with lower costs of capital and superior risk management resources.

### DESCRIPTION OF THE DRAWINGS

Figure 1 illustrates a block diagram for an initial distribution using an existing process for claim distribution.

Figure 2 illustrates a block diagram for a second distribution using an existing process for claim distribution.

Figure 3 illustrates a block diagram for a final distribution using an existing process for claim distribution.

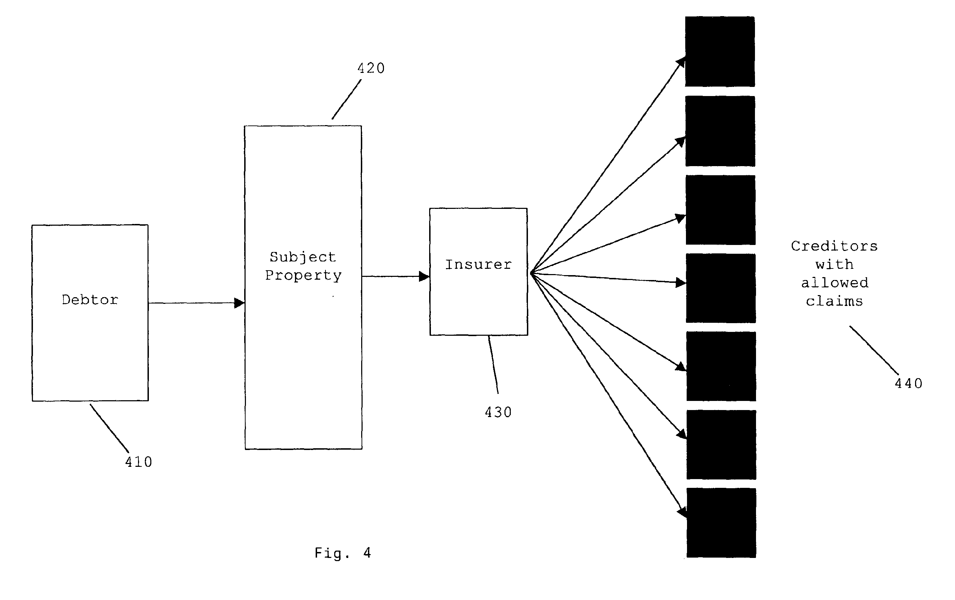

Figure 4 illustrates a block diagram for a claim distribution according to an exemplary embodiment of the present invention.

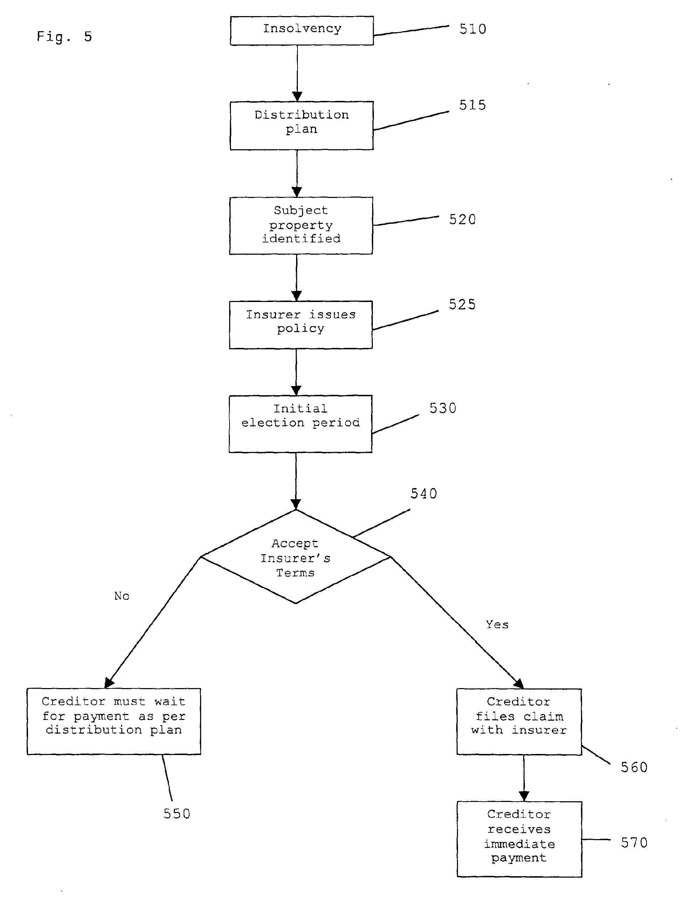

Figure 5 illustrates a flowchart for a claim distribution according to an exemplary embodiment of the present invention.

### DETAILED DESCRIPTION OF THE INVENTION

Various aspects of the present invention will be described, and for purposes of explanation, specific configurations and details are set forth in order to provide a thorough understanding of the present invention. It will be apparent to one skilled in the art, however, that the present invention may be practiced without these specific details. Furthermore, well known features have been omitted or simplified in order to make the present invention easy to understand.

Figure 4 depicts a procedure for distributing claims according to an exemplary embodiment of the present invention. Referring to Figure 4, an independent entity, which may be a financial institution such as, for example, an insurance company 430, contractually assumes the obligations of a debtor 410 to pay the claims of creditors 440, thereby relieving the debtor 410 of the burden of claim administration. In return, at the end of the distribution process when all allowed claims have been satisfied, insurer 430 will receive, for example, the balance, if any, of debtor's 410 subject property. If the insurer 430 can efficiently resolve the creditors' claims and pay creditors for less than the total value of the subject property, the balance is the underwriting profit to the insurer or independent entity 430.

Although the financial institution is an insurance company in the present exemplary embodiment, alternative embodiments of the present invention may employ a bank or other financial institution with low costs of capital. Furthermore, although this exemplary embodiment describes the practice of the method in the context of an insolvency reorganization, the present invention may be employed in the context of an insolvency liquidation.

Referring to Figure 4, according to an agreement between debtor 410 and insurer 430, insurer 430 issues an insurance policy to debtor 410 covering each creditor's 440 allowed claim to the debtor's subject property 420 whether or not a particular creditor elects to participate in the immediate and final payment by insurer 430 described below. In an exemplary embodiment, a predetermined percentage of creditors must elect to participate (e.g., 90%) in order for insurer 430 to offer such an insurance policy.

Under the policy insurer 430 takes over from debtor 410 the administration of the claim distribution process. Insurer 430 will, for example, negotiate with the creditors' committee disposition of the debtor's subject assets to ensure maximum value is achieved for the assets. In addition, insurer 430 takes control of payments made against the entire pool of subject property 420 and, making an actuarial judgment based on its experience in claims handling, offers to pay a pre-determined immediate and final pro rata distribution to all allowed creditors 440 who elect to accept insurer's 430 offer.

In an exemplary embodiment, insurer 430 may make an offer of an immediate and final payment to creditors 440 based on, but not limited to, for example, the following factors: (i) the total value of debtor's 410 property that insurer 430 expects will be available for distribution to allowed creditors 440; (ii) the present value of allowed claims; (iii) the price of distressed securities in the market; (iv) the incentives of the allowed creditors 440 (e.g. monetary needs of the creditors and/or the desire for continued dealings with the debtor); (v) the expected value of disputed and future claims that may be allowed during the course of the insolvency proceeding (e.g., based on historical allowed claim amounts from other cases in same or different industries); or (vi) any other relevant factors.

As can be seen from Figure 4, according to an embodiment of the present invention, those creditors 440 who elect to accept insurer's 430 offer immediately receive their consideration and thus transfer the risk associated with the ultimate resolution of disputed and future claims to insurer 430. Insurer 430 is able to successfully manage this risk because insurer 430 typically has greater financial strength than any single allowed creditor 440 and is generally financially stronger than bankrupt debtor 410 has actuarial experience and experience in resolving claims. Furthermore, insurer 430 can spread risk over all the claims in its portfolio. Thus, insurer 430 has a lower cost of capital and consequently is willing to distribute subject property much more rapidly than debtor 410.

Each allowed creditor 440 who does not elect to accept insurer's 430 initial offer of an immediate and final payment will receive its pro rata share of the subject property 420 according to what would have been paid to each of the total number of allowed creditors 440 according to the distribution plan had insurer 430 never entered the process. Insurer 430 will make a profit if, for example, the amount of the pro rata share of the subject property 420 according to the distribution plan is greater than the amount of the immediate and final payment insurer 430 pays to allowed creditors 440 depicted in Figure 4. Insurer 430 will lose money if, for example, the pro rata share according to the distribution plan is less than the immediate and final payment made by insurer 430 to electing creditors 440.

According to the present invention, insurer 430 accepts a calculated risk of overdistributing the subject property 420 of debtor 410 by immediately paying creditors electing to participate in the offer from insurer 430. However, the risk of loss is one that insurer 430 is better able than debtor 410 to absorb based in part, for example, on its experience in analyzing and paying claims. For example, insurer 430 makes its initial offer to allowed creditors 440 based on insurer's 430 prediction of what the total amount of allowed claims will be. Insurer 430 can more accurately predict the final number of allowed claims than either debtor 410 or allowed creditors 440 since, for example: (i) it has actuarial expertise and experience in claim distribution that debtor 410 and creditors 440 lack; and (ii) insurer 430 is an independent third entity and does not need to maintain existing relationships with allowed creditors 440, and is thus in a better negotiating position vis-à-vis allowed creditors 440 with respect to disputed claims.

Figure 5 is a more detailed depiction of the claims distribution process according to an exemplary embodiment of the present invention. Referring to Figures 4 and 5, insolvency proceedings initiated at step 510 result in creation of a distribution plan at step 515. The distribution plan is typically created, for example, by negotiations between creditors 440 and the debtor 410. Pursuant to insolvency laws and regulations, certain property of debtor 420 are made subject to a court supervised distribution plan at step 515, for example, which results from negotiation of the distribution plan created at step 510 between the creditors 440 and the debtor 410.

Subject to court approval, the debtor's 410 subject property 420 is insured by a policy at step 525 issued by insurer 430 to the debtor. The insurance policy issued at step 525, as has already been described, relieves debtor 410 of the costs of administering the claims resolution process and of the costs of making distributions to allowed creditors 440.

Insurer 430 may announce an initial election period of, for example, 90 days, during which insurer 430 will give allowed creditors 440 the option of obtaining a final immediate payment at step 570 which is, for example, a pre-determined percentage of the amount of each creditor's allowed claim. Alternative embodiments of the present invention, however, may omit an election period.

According to an embodiment of the present invention, those allowed creditors 440 who do not elect to receive a final immediate payment at step 570 receive their respective pro rata amounts from the next distribution and any subsequent distributions at step 550 as if the insurance policy had never been in place. The pro rata amount is calculated, for example, by dividing the amount of the subject property 420 by the final amount of allowed claims 440, including allowed claims 440 that were satisfied by insurer 430 during the period of election.

Referring to Figure 6, alternative embodiments of the present invention may be implemented using, for example, a software application running over a conventional computer network 610 such as, for example, a local area network, a wide area network, or the Internet. An insurer, for example, insurer 430, may employ one or more server computers conventionally coupled to a client-server network which may include computers accessible by the debtor 410, or by the creditors 440, or by both. In an alternative embodiment, the software application may run on one or more conventional HTTP servers and be accessible by client browsers over the World Wide Web.

Referring to Figure 7, a software application, according to an exemplary embodiment of the present invention, may perform the functions described in Figures 4 and 5. Debtor 410 establishes a financial relationship with an insurer 430 by entering registration information into debtor regisration module 710 which transmits debtor registration information to database 720 for storage. Creditor registration module 730 takes registration information provided by a creditor 440 and transmits said information for storage in a database 720. Offer processing module 740 transmits to the creditor 440 the amount of insurer's 430 offer of a final and immediate payment which is calculated by the offer calculation module 750.

Through election module 760, a registered creditor may, for example, transmit to offer processing module 740 an acceptance or rejection of insurer's offer of an immediate and final payment. If the insurer's 430 offer of payment is accepted by creditor 440, control may then be passed, for example, to the payment verification module 770 which gathers payment information from the creditor 440 and transmits said information to database 720 for storage. Payment processing module 780 may then, for example, process payment of the immediate and final offer to electing creditors 440 using information stored in database 720.

The process according to the present invention gives allowed creditors 440 incentives to elect immediate payment under the insurance policy. By refusing an immediate final payment, allowed creditors 440 incur added risk since the amount to which allowed creditors 440 are entitled in the post-election period is no greater than the amount to which they would have been entitled had debtor 410 remained in place as administrator of the claims resolution process. Furthermore, distributions under the distribution plan 550 may take as much as several years to conclude.

The present invention will result in more rapid distribution to allowed claim holders during the process of insolvency resolution, creating greater liquidity for claims and further resulting in a greater availability of credit.

## Claims

1. A method for distributing property in an insolvency proceeding, comprising:
establishing a financial arrangement between a responsible party and a debtor, the financial arrangement including terms for paying claims against the debtor;
offering, by the responsible party, to pay a creditor having a claim against the debtor a predetermined payment amount in satisfaction of the entire claim against the debtor; and
if the creditor accepts the offer, paying the predetermined payment amount to the creditor.

2. The method of claim 1 wherein the payment of the predetermined payment amount is completed within a predetermined time period.

3. The method of claim 2 wherein the predetermined time period is one of a month, a week and a day.

4. The method of claim 1 comprising:
if the creditor does not accept the offer, paying the creditor in accordance with a payment plan established by a third party overseeing the insolvency proceeding.

5. The method of claim 4 wherein the third party includes one of a state bankruptcy court and a federal bankruptcy court.

6. The method of claim 1, comprising:
providing, after paying all claims against the debtor, any remaining proceeds of all assets of the debtor involved in the insolvency proceeding to the insuring or other financially responsible party.

7. The method of claim 1, wherein the responsible party includes a financial institution.

8. The method of claim 1, wherein the creditor includes a plurality of creditors of the debtor.

9. The method of claim 1, wherein the predetermined payment amount differs from an amount paid in the payment plan established by the third party.

10. The method of claim 1, wherein the insolvency proceeding includes a bankruptcy proceeding.

11. The method of claim 1, comprising:
establishing a distribution plan;
identifying subject property of the debtor; and
wherein the insurance policy terms include paying claims against the debtor by the insuring party as a function of an analysis of the subject property by the insuring party.

12. The method of claim 1, wherein the insurance policy obligates the insuring party to pay all claims against the debtor.

13. The method of claim 1, wherein the financial arrangement includes an insurance policy.

14. The method of claim 13, wherein the responsible party includes an insurer.

15. The method of claim 14, wherein the insurer includes one of an insurance company or a reinsurance company.

16. A system for distributing an insolvent debtor's property to a plurality of creditors in an insolvency proceeding, wherein a responsible party host server and a plurality of clients for each of the plurality of creditors are coupled to a data communications network, the responsible party host server including:
computer programmable means for communicating with the plurality of creditors, the responsible party and the debtor;
computer programmable means for establishing a financial arrangement between the responsible party and the debtor;
computer programmable means for maintaining a database containing information regarding the debtor and each of the plurality of creditors;
computer programmable means for calculating an amount of final payment offered to each of the plurality of creditors;
computer programmable means for providing an offer of the amount to each of the plurality of creditors;
computer programmable means for processing one of an acceptance and a rejection of by each of the plurality of creditors of the offer; and
computer programmable means for processing claim payments to each of the plurality of creditors that accepts the offer.

17. The system of claim 16, wherein the financial arrangement includes an insurance policy.

18. The system of claim 17, wherein the responsible party includes an insurance company.

19. The system of claim 16, wherein the insolvency proceeding includes a bankruptcy proceeding.

20. The system of claim 16, wherein the payment of the offered amount is completed within a predetermined time period.
